Europäisches Patentamt

European Patent Office

Office européen des brevets

(19)

(11) Veröffentlichungsnummer: **0 162 219**
**A2**

(12) **EUROPÄISCHE PATENTANMELDUNG**

(21) Anmeldenummer: **85103075.9**

(22) Anmeldetag: **16.03.85**

(51) Int. Cl.⁴: **H 01 B 13/00**
**B 41 F 17/14**

(30) Priorität: **22.05.84 DE 3419027**

(43) Veröffentlichungstag der Anmeldung:
**27.11.85 Patentblatt 85/48**

(84) Benannte Vertragsstaaten:
**AT CH FR LI**

(71) Anmelder: **Idento Gesellschaft für industrielle**
**Kennzeichnung mbH**
**Paul-Ehrlich-Strasse 23**
**D-6074 Rödermark(DE)**

(72) Erfinder: **Breuers, Manfred**
**Saalfeldener Strasse 50**
**D-6074 Rödermark(DE)**

(74) Vertreter: **Katscher, Helmut, Dipl.-Ing.**
**Bismarckstrasse 29**
**D-6100 Darmstadt(DE)**

(54) **Vorrichtung zum Prägen von Kabelmarkierungen.**

(57) Zum Prägen von mehreren Kabelmarkierungsringen (11), die in mindestens zwei parallelen Reihen zu einem gemeinsamen Spritzformkörper zusammengefaßt sind, wird ein Prägewerkzeug verwendet, das einen oberen und einen unteren Prägekopf (1, 2) aufweist, die in Wekzeugführungen gegeneinander bewegbar geführt sind. Die zu prägenden Kabelmarkierungsringe (11) sind auf zwei parallelen Aufnahmenadeln (10) aufgenommen, die in einem Aufnahmekörper (6) mittels elastischer Buchsen (8) gelagert sind. Ein Prägekopf (1) ist an gegenüberliegenden Seiten jeweils mit einer Zentriergabel (13) versehen, die Zentrierschlitze (14) aufweisen, in denen die Aufnahmenadeln (10) beim Prägevorgang zentriert werden.

Fig. 1

EP 0 162 219 A2

- 1 -

Idento Gesellschaft für industrielle Kennzeichnung mbH

Vorrichtung zum Prägen von Kabelmarkierungsringen

Die Erfindung betrifft eine Vorrichtung zum Prägen von mehreren aus Kunststoff bestehenden Kabelmarkierungsringen, die in mindestens zwei parallelen Reihen zu einem gemeinsamen Spritzformkörper zusammengefaßt sind, mit einem Prägewerkzeug, das einen oberen und einen unteren Prägekopf aufweist, die in Werkzeugführungen gegeneinander bewegbar geführt sind.

Aus Kunststoff bestehende, längsgeschlitzte Kabelmarkierungsringe, die auf zwei gegenüberliegenden Seiten eine eingeprägte und eingefärbte Markierung tragen, beispielsweise eine Ziffer oder einen Buchstaben, sind bekannt (DE-PS 26 55 958).

Die auf den gegenüberliegenden Seiten der Kabelmarkierungsringe anzubringenden Einprägungen werden mittels Prägewerkzeugen vorgenommen, die gegeneinander bewegbare Prägeköpfe aufweisen. Eine besondere Schwierigkeit liegt darin, die zu einem gemeinsamen Spritzformkörper zusammengefaßten Kabelmarkierungsringe während des Prägevorgangs zu halten. Die von den Prägestempeln der beiden Prägeköpfe ausgeübten Kräfte sind verhältnismäßig groß, so daß die Gefahr besteht, daß die Kabelmarkierungsringe während des doppelten Prägevorgangs seitlich ausweichen, wodurch das Prägebild verwischt wird. Bei nur einseitiger Prägung besteht diese Schwierigkeit nicht, weil die zu prägenden Ringe dann in einem unteren Gesenk aufgenommen und gehalten werden können.

Aufgabe der Erfindung ist es daher, eine Vorrichtung der eingangs genannten Gattung zu schaffen, bei der ein seitliches Ausweichen der zu prägenden Kabelmarkierungsringe beim Prägevorgang verhindert wird.

Diese Aufgabe wird erfindungsgemäß dadurch gelöst, daß zwei parallele Aufnahmenadeln für jeweils eine Reihe von Kabelmarkierungsringen mittels eines Aufnahmeträgers elastisch gelagert sind und daß einer der beiden Prägeköpfe an zwei gegenüberliegenden Seiten jeweils mit einer Zentriergabel versehen ist, die zwei zum anderen Prägekopf hin geöffnete Zentrierschlitze für die Aufnahmenadeln aufweist.

Durch die beiden Zentriergabeln werden beide Aufnahmenadeln an ihren beiden Enden unmittelbar vor und während dem Prägevorgang gegenüber dem mit den Zentriergabeln versehenen Prägekopf zentriert, so daß die Kabelmarkierungsringe nicht seitlich ausweichen können. Die Zentrierung gegenüber dem anderen Prägekopf erfolgt durch die vorhandene Werkzeugführung. Um die Zentrierung der Aufnahmenadeln wirksam zu ermöglichen, muß eine begrenzte Beweglichkeit der Aufnahmenadeln an ihren beiden Enden gewährleistet sein. Während diese Bewegbarkeit an den freien Enden der Aufnahmenadeln bereits durch deren Elastizität gewährleistet ist, wird die Bewegbarkeit am anderen, im Aufnahmeträger aufgenommenen Ende durch die erfindungsgemäße elastische Lagerung erzielt.

Diese elastische Lagerung kann darin bestehen, daß die Aufnahmenadeln jeweils in einer elastischen Buchse in einer Bohrung des Aufnahmeträgers gelagert sind. Dadurch können sich die Aufnahmenadeln gegenüber dem Aufnahmeträger beim Zentriervorgang verschieben.

0162219

- 3 -

Zusätzlich hierzu oder anstelle dieser Maßnahme kann in Weiterbildung des Erfindungsgedankens vorgesehen sein, daß der Aufnahmeträger über elastische Zwischenkörper an einem Aufnahmetisch angebracht ist. Diese elastischen Zwischenkörper ermöglichen eine begrenzte Verschiebbarkeit des die Aufnahmenadeln tragenden Aufnahmeträgers beim Zentriervorgang.

Der Aufnahmetisch kann beispielsweise ein Drehtisch sein, durch den die Aufnahmenadeln aus einer Zuführstellung, in der die Kabelmarkierungsringe auf die Aufnahmenadeln aufgeschoben werden, in eine Prägestellung im Prägewerkzeug schwenkbar sind. Durch die elastische Lagerung der Aufnahmenadeln wird verhindert, daß beim Zentriervorgang unzulässig hohe Kräfte über den Aufnahmeträger auf den Drehtisch ausgeübt werden. Trotzdem ist eine vollständige und von der Genauigkeit des Drehtischs unabhängige Zentrierung der Aufnahmenadeln und damit der darauf angeordneten Kabelmarkierungsringe gegenüber den Prägeköpfen des Prägewerkzeugs sichergestellt.

Vorzugsweise ist vorgesehen, daß sich die Zentrierschlitze jeweils zum anderen Prägekopf hin erweitern, um das Einführen der Aufnahmenadeln in die Zentrierschlitze zu erleichtern.

Die Zentriergabeln sind vorzugsweise auswechselbar am Prägekopf angebracht, damit man die Zentriergabeln bei aufgetretenem Verschleiß leicht austauschen kann.

Die Erfindung wird nachfolgend an einem Ausführungsbeispiel näher erläutert, das in der Zeichnung dargestellt ist. Es zeigt in vereinfachter Darstellungsweise:

- 4 -

Figur 1    eine Seitenansicht eines Prägewerkzeugs mit einer
           Aufnahme für die zu prägenden Kabelmarkierungsringe,
Figur 2    einen Schnitt längs der Linie II - II in Figur 1
           und
Figur 3    einen Schnitt längs der Linie III - III in Figur 1.


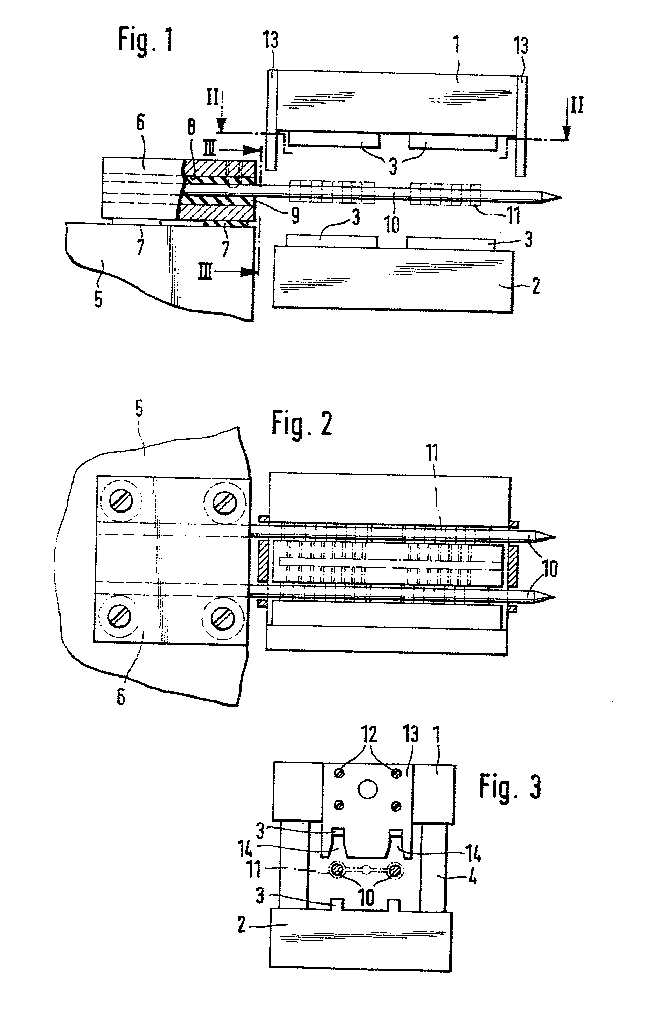

Das in der Zeichnung dargestellte Prägewerkzeug weist einen
oberen Prägekopf 1 und einen unteren Prägekopf 2 auf, die
jeweils Prägestempel 3 tragen. Die beiden Prägeköpfe 1 und 2
sind durch in Figur 3 nur angedeutete Werkzeugführungen 4
gegeneinander bewegbar geführt. Das Prägewerkzeug ist in einer
in der Zeichnung nicht dargestellten Prägepresse aufgenommen.


Auf einem vor dem Prägewerkzeug angeordneten, horizontalen
Drehtisch 5 ist ein Aufnahmekörper 6 auf gummielastischen
Zwischenkörpern 7 elastisch gelagert. In zwei parallelen
Bohrungen 8 des Aufnahmekörpers 6 sind gummielastische Buchsen
9 angeordnet, die jeweils eine aus Stahl bestehende Aufnahmenadel 10 tragen.


Auf die beiden parallelen Aufnahmenadeln 10, die an ihrem
freien Ende jeweils mit einer Spitze versehen sind, werden
in einer (nicht dargestellten) Zuführstellung des Drehtisches
5 die in zwei parallelen Reihen angeordneten, zu einem gemeinsamen Spritzformkörper zusammengefaßten Kabelmarkierungsringe 11 aufgeschoben, die in der Zeichnung mit strichpunktierten Linien angedeutet sind. Jeder dieser Kabelmarkierungsringe soll an seiner Oberseite und seiner Unterseite durch
die Prägestempel 3 mit einer Einprägung versehen werden.


An zwei gegenüberliegenden Seiten des oberen Prägekopfes 1
ist mittels Schrauben 12 jeweils eine Zentriergabel 13 auswechselbar angebracht. Jede Zentriergabel 13 weist zum unteren Prägekopf 2 hin geöffnete Zentrierschlitze 14 auf, die sich zu ihrer Öffnung hin erweitern und die in ihrer Breite dem Durchmesser der vorzugsweise zylindrischen Aufnahmenadeln 10 entsprechen.

Der Drehtisch 5 trägt mehrere Paare von Aufnahmenadeln 10, so daß sich in jeder Drehstellung des Drehtisches 5 zwei Aufnahmenadeln in einer Zuführstellung und zwei andere Aufnahmenadeln 10 im Prägewerkzeug befinden. Wenn die beiden Prägeköpfe 1, 2 durch die Prägepresse gegeneinander bewegt werden, greifen die Zentriergabeln 13 an beiden Enden über die Aufnahmenadeln 10 und zentrieren diese gegenüber dem oberen Prägekopf 1, der wiederum durch die Werkzeugführungen 4 gegenüber dem unteren Prägekopf 2 zentriert ist. Dadurch werden die Kabelmarkierungsringe 11 beim Prägevorgang so festgehalten, daß sie seitlich nicht ausweichen können; ein Verwischen des Prägebildes ist dadurch ausgeschlossen.

Die an die Zuführgenauigkeit des Drehtisches 5 gestellten Anforderungen sind verhältnismäßig gering; es muß nur sichergestellt sein, daß die Aufnahmenadeln 10 die Kabelmarkierungsringe 11 zuverlässig aufnehmen und daß die Aufnahmenadeln 10 im Prägewerkzeug so angeordnet werden, daß sie von den Zentrierschlitzen 14 der Zentriergabeln 13 sicher erfaßt und ausgerichtet werden.

Da die elastische Aufnahme der Aufnahmenadeln 10 mittels der Buchsen 9 bzw. der Zwischenkörper 7 nicht nur in horizontaler Richtung für den Zentriervorgang an den Zentriergabeln 13 wirkt, sondern auch in vertikaler Richtung, bewirkt diese elastische Aufnahme auch einen Ausgleich der vom oberen Prägekopf 1 und vom unteren Prägekopf 2 auf die Kabelmarkierungsringe 11 ausgeübten Kräfte.

Idento Gesellschaft für industrielle Kennzeichnung mbH

Vorrichtung zum Prägen von Kabelmarkierungsringen

P a t e n t a n s p r ü c h e

1. Vorrichtung zum Prägen von mehreren aus Kunststoff bestehenden Kabelmarkierungsringen, die in mindestens zwei parallelen Reihen zu einem gemeinsamen Spritzformkörper zusammengefaßt sind, mit einem Prägewerkzeug, das einen oberen und einen unteren Prägekopf aufweist, die in Werkzeugführungen gegeneinander bewegbar geführt sind, dadurch gekennzeichnet, daß zwei parallele Aufnahmenadeln (10) für jeweils eine Reihe von Kabelmarkierungsringen (11) mittels eines Aufnahmeträgers (6) elastisch gelagert sind und daß einer der beiden Prägeköpfe (1) an zwei gegenüberliegenden Seiten jeweils mit einer Zentriergabel (13) versehen ist, die zwei zum anderen Prägekopf (2) hin geöffnete Zentrierschlitze (14) für die Aufnahmenadeln (10) aufweist.

2. Vorrichtung nach Anspruch 1, dadurch gekennzeichnet, daß die Aufnahmenadeln (10) jeweils in einer elastischen Buchse (9) in einer Bohrung (8) des Aufnahmeträgers (6) gelagert sind.

3. Vorrichtung nach Anspruch 1 oder 2, dadurch gekennzeichnet, daß der Aufnahmeträger (6) über gummielastische Zwischenkörper (7) an einem Aufnahmetisch (5) angebracht ist.

4. Vorrichtung nach Anspruch 3, dadurch gekennzeichnet,

   daß der Aufnahmetisch ein Drehtisch (5) ist, durch den die Aufnahmenadeln (10) aus einer Zuführstellung in eine Prägestellung im Prägewerkzeug schwenkbar sind.

5. Vorrichtung nach Anspruch 1, dadurch gekennzeichnet,

   daß sich die Zentrierschlitze (14) jeweils zum anderen Prägekopf (2) hin erweitern.

6. Vorrichtung nach Anspruch 1, dadurch gekennzeichnet,

   daß die Zentriergabeln (13) auswechselbar am Prägekopf (1) angebracht sind.

0162219

1/1

Fig. 1

Fig. 2

Fig. 3